# EUROPEAN PATENT APPLICATION

(11) **EP 0 963 831 A1**
(43) Date of publication of application: **15.12.1999**
(21) Application number: 99304546.7
(22) Date of filing: 10.06.1999
(51) Int. Cl.: B29C 47/00, B29C 37/00

(54) **Method and apparatus for extrusion**

(30) Priority: 13.06.1998 GB 9812694
(71) Applicant: Chase Products Limited, Weobley, Herefordshire HRU 8QU (GB)
(72) Inventor: Wheeler,Stanley Charles George, Ross On Wye, HR9 5AF, (GB); Denley,Clive Brynmor,, Herefordshire HR6 8QS (GB)
(74) Representative: Lainé, Simon James

(57) **Abstract**

There is provided a method of extrusion comprising the steps of:
(a) extruding a member (3) comprising an inner surface having opposed portions from an extruder head; and
(b) simultaneously with step (a) coating the inner surface of the extruded member (3) with a lubricating substance as the member (3) extends from the extruder head to prevent or reduce sticking of the opposed portions to each other.

Also disclosed is an apparatus for implementing the method.

## Description

This invention relates to a method and apparatus for extrusion particularly, although not exclusively, for forming extrusions having fine detail or for forming a flattened seal, for example a seal which may form a non-return device with particular but not exclusive reference to waste and/or odour traps for domestic and other plumbing.

During the manufacture of flattened seals, it has been found that the inner surface of a tube tends to stick together upon flattening of the tube, for example by means of rollers. When the inner surface is stuck in a flattened tube, it cannot work effectively as a seal.

WO-A-9619620 discloses a non-return device having flexible wall members in face-to-face surface contact which can be used as a valve in domestic plumbing devices or the like. This document is not concerned with how the tubing is made.

Furthermore, it has been found that extrusions having very fine holes or cross-section detail are difficult to produce due to sticking of internal walls.

According to a first aspect of the present invention, there is provided a method of extrusion comprising the steps of:
(a) extruding a member comprising an inner surface having opposed portions from an extruder head; and
(b) simultaneously with step (a) coating the inner surface of the extruded member with a lubricating substance as the member extends from the extruder head to prevent or reduce sticking of the opposed portions to each other.

The present invention thereby prevents sticking of the inner surface of the extruded member, and allows extruded members to be produced which have fine detail.

The method is particularly applicable for forming a seal, for example in the form of a non-return device, particularly for waste and/or odour traps for domestic or other plumbing.

The extruded member is preferably formed of an elastomeric material, for example silicone rubber.

The lubricating substance is preferably an oil, for example silicone oil, although any lubricating substance appropriate for the material from which the extruded member is made can be used, and another example is talc.

In a particularly preferred embodiment, the inner surface of the extruded member is coated by extruding the member from the extruder head over a source of the lubricating substance. Preferably, the source is capable of being replenished without interrupting the extrusion. Such an embodiment would provide a continuous process for the production of the extruded member.

Conveniently, the member is extruded upwardly, in a substantially vertical direction, so that it forms a well for the lubricating substance emerging from the source and ensures that the inner surface is evenly coated all round.

The extruded member may be tubular, and the method may further comprise the step of flattening the extruded member. In a preferred embodiment, the flattening of the tubular member is carried out by means of one or more rollers. These rollers may have an adjustable nip (i.e. means for adjusting the degree of flattening) and preferably have a variable speed.

In one embodiment, the method further comprises the step of coating the external surface of the extruded member with a non-stick substance, for example talc. The non-stick substance may serve to prevent sticking of the external surface to the parts (e.g. the rollers) which cause flattening of the member or other parts subsequently involved in the process. The external surface is preferably coated by extruding the member from the extruder head through a source of the non-stick substance. The source of the non-stick substance may be positioned in a container which is attached to the extruder head. The method may further comprise the step of vibrating the extruded member to aid the coating of the external surface. In one example, the vibrating may be carried out by means of an electrically controlled arm. A second source of a non-stick substance, for example talc, may be provided to prevent sticking to the stamping device referred to below. This may be provided at the top of the rollers.

After the member has been flattened it may be passed onto a conveyor belt, which is preferably heated.

In one embodiment, the method may further comprise the step of further flattening the edge portions of the flattened member. This provides slight angles on the two edges to make the edges sharp and aid in the effective flattening of the member. Such a further flattening step may be carried out by at least one roller.

The method may further comprise the step of stamping the flattened member to provide additional flattening. The stamp may be provided with a conformable material, for example a sponge, on its face.

Furthermore, the method may further comprise the step of cutting the extruded member to an appropriate length. This may be by means of a profiled blade which shapes the cut edge and thereby, in one embodiment, aids the sealing action of the formed seal. However, a flat blade could be used instead. The cutting member used to cut the extruded member may be included in means for providing the stamping step.

Preferably, the method further comprises the step of curing the extruded member.

Particularly when the method is used to produce an extrusion having fine holes or cross-section detail, the extruded member may be cured in a substantially vertical position. The extruded member is preferably shaped by a die. In one embodiment, the extruded member has a generally T-shaped cross section, although any appropriate shape may be formed.

According to a second aspect of the present invention, there is provided an extrusion apparatus comprising:
(a) means for extruding a member comprising an inner surface having opposed portions from an extruder head; and
(b) means for coating the inner surface of the extruded member with a lubricating substance as the member extends from the extruder head to prevent or reduce sticking of the opposed portions to each other.

The apparatus may further comprise means for flattening the extruded member.

The apparatus may comprise curing means, which may be positioned adjacent the extruder head.

Although the invention has been defined above, it is to be understood that it includes any inventive combination of the features set out above or in the following description.

The invention may be performed in various ways and a specific embodiment will now be described, by way of example, with reference to the accompanying drawings, in which:-
Figure 1 is a cross-section view showing part of the process in the region of the extruder head in one embodiment of the invention;
Figure 2 is a schematic view showing subsequent steps of the process of Figure 1;
Figure 3 is an exploded view of an alternative embodiment of the invention; and
Figure 4 is a cross-section of an extrusion which may be produced by the present invention.

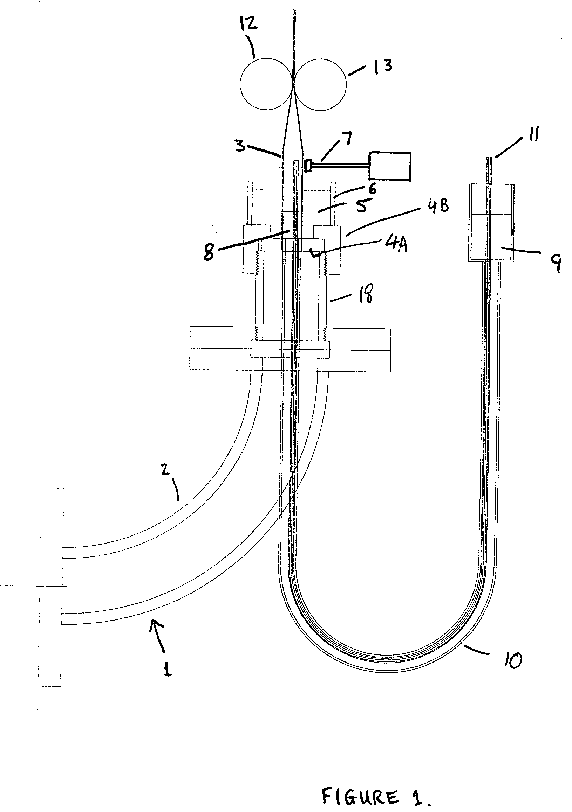

Referring to Figure 1, an extruder shown generally at 1 comprises a 90° bend attachment 2 to allow vertical extrusion of a tube. A silicone rubber tubular member 3 is extruded from the end of the extruder 1 in a substantially vertical direction from a die plate 4A which is centred and held by a die centering 4B. As the tubular member 3 leaves the die plate 4A, it passes through a well 5 of talc. The well 5 is contained in a substantially circular container 6 of approximately 130mm diameter which is attached to the end of extruder 1. The talc contained in the well 5 evenly coats the outer surface of the extruded tube. This coating process is aided by the provision of an electrically controlled arm 7 which is in constant contact with the member 3 and which vibrates it.

Also as the tubular member 3 is extruded, it passes over a source 8 of silicone oil. The oil is prevented from running away by the extruded tubular member 3. The source 8 is topped up from time to time without interrupting or stopping the extrusion process from a well 9 of silicone oil which is connected to the source 8 by means of a U-bend pipe 10. Also shown is an air pipe 11 which extends through the pipe 10 and the source 8 and well 9 and prevents the formation of a vacuum. As the tubular member 3 is extruded, it passes between a set of variable speed driven rollers 12, 13 which have an adjustable nip and which form the round tube into a flat tube. As a result of the previous coating treatment with talc, prevention of sticking to the rollers 12, 13 is achieved. Furthermore, the coating of the inner surface of the tubular member 3 with silicone oil prevents the walls from sticking together after flattening by rollers 12, 13.

A secondary well (not shown) may be provided at the top of rollers 12 and/or 13 which provides talc to the external surface of the tube to further prevent sticking to the stamp referred to below.

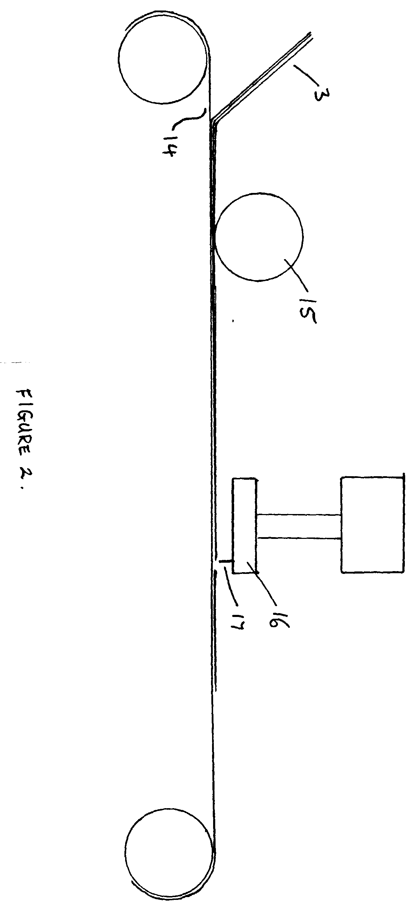

Referring to Figure 2, the flattened tubular member 3 is subsequently passed at approximately 45° onto an electrically heated variable speed conveyor belt 14. Positioned respectively downstream on the conveyor belt 14 are an edge roller 15 and a pneumatically powered stamp 16 having a blade 17. The stamp 16 may be controlled by means of a counter and/or encoder (not shown) on the conveyor belt.

As the member 3 passes onto the conveyor belt 14, it passes beneath edge roller 15 which serves to put slight angles on the two edges of the flattened member 3 in order to further aid flattening thereof. The member 3 then passes through stamp 16 (having a sponge or other conformable material on its face) which finally flattens the tube further and, by means of blade 17, cuts the tube to a required length, which may be adjustable. The blade 17 is profiled to shape the cut edge in order to enhance the sealing action of the final product.

After the above-mentioned steps, the flattened member 3 preferably continues along the conveyor belt to be cured.

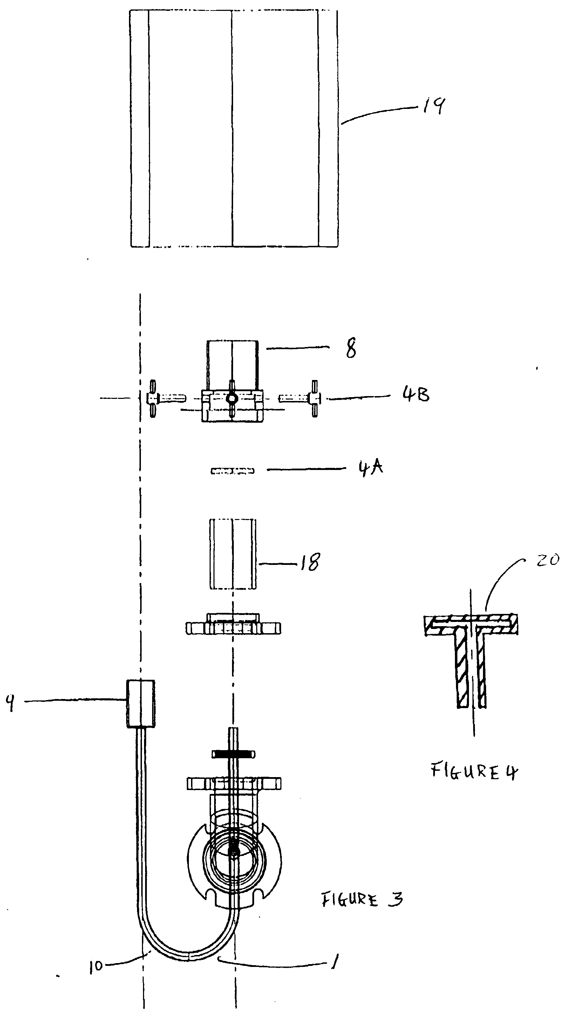

Figure 3 shows an alternative embodiment of the invention (in exploded form) which is particularly used to produce extrusions having very fine holes or cross-section detail. Many of the parts are the same as those in Figure 1 and are indicated by the same reference numerals. A spacer 18 is used to space various components of the apparatus, and provides fitting of the centering 4B to the extruder 1. In addition, a curing box 19 is shown through which an extruded member is passed for curing thereof. The curing box 19 is mounted directly above the head of extruder 1. In this embodiment, the use of the non-stick oil on the inner surface of the extrusion is enhanced by the vertical curing which ensures that the extrusion does not bend or kink. In this way, it is possible to produce extrusions which have very fine holes or cross-section detail that would not previously have been possible. The types of profile which can be produced by this method are numerous, and one example is shown in Figure 4 which illustrates a T-shaped extrusion 20.

## Claims

1. A method of extrusion comprising the steps of:
(a) extruding a member comprising an inner surface having opposed portions from an extruder head; and
(b) simultaneously with step (a) coating the inner surface of the extruded member with a lubricating substance as the member extends from the extruder head to prevent or reduce sticking of the opposed portions to each other.

2. A method according to claim 1, wherein the extruded member is formed of an elastomeric material.

3. A method according to claim 1 or 2, wherein the inner surface is coated with an oil.

4. A method according to claim 3, wherein the oil is silicone oil.

5. A method according to any preceding claim, wherein the inner surface of the extruded member is coated by extruding the member from the extruder head over a source of the lubricating substance.

6. A method according to claim 5, wherein the source is capable of being replenished without interrupting the extrusion.

7. A method according to any preceding claim, wherein the extruded member is extruded upwardly in a substantially vertical direction.

8. A method according to any preceding claim, wherein the extruded member is tubular.

9. A method according to claim 8, further comprising the step of flattening the extruded member.

10. A method according to claim 9, wherein the extruded member is flattened by one or more rollers.

11. A method according to claim 10, wherein the one or more rollers comprise means for adjusting the degree of flattening.

12. A method according to claim 10 or 11, further comprising the step of coating the external surface of the extruded member with a non-stick substance.

13. A method according to claim 12, wherein the external surface is coated by extruding the member from the extruder head through a source of the non-stick substance.

14. A method according to claim 13, wherein the source of the non-stick substance is positioned in a container which is attached to the extruder head.

15. A method according to any one of claims 12 to 14, further comprising the step of vibrating the extruded member to aid the coating of the external surface.

16. A method according to any one of claims 9 to 15, further comprising the step of further flattening the edge portions of the flattened member.

17. A method according to any one of claims 9 to 16, further comprising the step of stamping the flattened member.

18. A method according to any preceding claim, further comprising the step of cutting the extruded member to an appropriate length.

19. A method according to any preceding claim, further comprising the step of curing the extruded member.

20. A method according to claim 19, wherein the extruded member is cured in a substantially vertical position.

21. A method according to any preceding claim, wherein the extruded member is shaped by a die.

22. A method according to claim 21, wherein the extruded member has a T-shaped cross-section.

23. An extrusion apparatus comprising:
(a) means for extruding a member comprising an inner surface having opposed portions from an extruder head; and
(b) means for coating the inner surface of the extruded member with a lubricating substance as the member extends from the extruder head to prevent or reduce sticking of the opposed portions to each other.

24. An apparatus according to claim 23, further comprising means for flattening the extruded member.

25. An apparatus according to claim 23 or 24, further comprising curing means.

26. An apparatus according to claim 25, wherein the curing means is positioned adjacent the extruder head.
